# NEUE EUROPÄISCHE PATENTSCHRIFT

(11) **EP 0 625 449 B2**
(45) Veröffentlichungstag und Bekanntmachung des Hinweises auf die Entscheidung über den Einspruch: **21.02.2001**
(45) Hinweis auf die Patenterteilung: 22.01.1997
(21) Anmeldenummer: 94102814.4
(22) Anmeldetag: 24.02.1994
(51) Int. Cl.: B60R 22/36

(54) **Sicherheitsgurtaufrollautomat**
Seatbelt retractor
Rétracteur pour ceinture de sécurité

(30) Priorität: 29.04.1993 DE 4314153
(43) Veröffentlichungstag der Anmeldung: 23.11.1994
(73) Patentinhaber: HS Technik und Design Technische Entwicklungen GmbH, 82234 Wessling (DE)
(72) Erfinder: Specht, Martin Dipl.-Ing. (FH), D-82340 Feldafing (DE)
(74) Vertreter: Nöth, Heinz, Dipl.-Phys.

(56) Entgegenhaltungen:
- EP-B1- 0 298 123
- GB-A- 2 131 279
- US-A- 4 747 562
- US-A- 4 749 143

## Beschreibung

Die Erfindung betrifft einen Sicherheitsgurtaufrollautomaten nach dem Oberbegriff des Patentanspruches 1.

Bei einem derartigen aus der EP-B-298 123 bekannten Sicherheitsgurtaufrollautomaten wird zur Erzielung eines Vorverriegelungszustandes bei annähernd voll ausgezogener Bandlänge des Sicherheitsgurtes die zur Betätigung von Sicherungsbauteilen erforderliche Untersetzung der Wickelwellendrehung auf eine Sicherungsbauteile betätigende Betätigungseinrichtung durch ein als Planetengetriebe ausgebildetes Untersetzungsgetriebe erreicht. Das Untersetzungsgetriebe weist ein exzentrisch und drehbar gegenüber der Wickelwellenachse gelagertes Planetenrad auf, welches von der Wickelwelle angetrieben wird und gegenläufig an einem gehäusefesten Hohlrad mit Innenverzahnung als Abrollzahnrad abrollt. Über einen am Planetenrad angeformten Mitnehmerstift wird die ringförmige koaxial zur Wickelwelle angeordnete Betätigungseinrichtung mit Untersetzung mitgedreht bis bei annähernd vollem Bandauszug die Sicherungsbauteile in die Vorverriegelungsstellung gebracht werden.

Ein bei einem Sicherheitsgurtaufrollautomaten aus der DE-C-37 11 531 bekannter Vorverriegegungszustand bewirkt bei diesem Sicherheitsgurtaufrollautomaten eine Bereitstellung für die Hauptverriegelung, in welcher vom Gurtband ausgeübte Kräfte in den massiv ausgebildeten und mit dem Fahrzeug verbundenen Rahmen des Sicherheitsgurtaufrollautomaten eingeleitet werden. Hierdurch wird ferner erreicht, daß man eine hochsensible mechanische Sensoreinrichtung für die Vorverriegelung zum Einsatz bringen kann, weil leichte Bauteile verwendet werden können, die die Kräfte, welche bei der Hauptverriegelung zur Auswirkung kommen, nicht aufnehmen müssen. Hierdurch werden bei herkömmlichen Sicherheitsgurtaufrollautomaten ein hochsensitives Ansprechverhalten und die Fähigkeit, hohe Vorverlagerungskräfte aufzufangen, welche vom Körper des Fahrzeuginsassen auf das Gurtband ausgeübt werden, erreicht.

Aus der US-A-4,747.562 ist ein Sicherheitsgurtaufrollautomat bekannt, bei dem mit Hilfe eines Getriebes und einer Steuerscheibe in Bandauszugsrichtung von einer bestimmten abgewickelten Bandlänge bis zum vollständigen Bandauszug eine Blockierung vorgesehen ist, so daß sich Gegenstände für den Transport in Bandauszugsrichtung blockieren lassen.

Aufgabe der Erfindung ist es, einen Sicherheitsgurtaufrollautomaten der eingangs genannten Art zu schaffen, bei welchem der bei annähernd vollständig ausgezogenem Sicherheitsgurt erwünschte Vorverriegelungszustand mit einfachen konstruktiven Mitteln erreicht wird.

Diese Aufgabe wird erfindungsgemäß durch die kennzeichnenden Merkmale des Patentanspruches 1 gelöst.

Die Betätigungseinrichtung kann eine Steuerfläche aufweisen, die einen Eingriffsbereich zur Betätigung der Sicherungsbauteile bildet. Diese Steuerfläche kann sich über einen bestimmten Winkelbereich erstrecken, der unter Berücksichtigung der untersetzten Drehzahl bzw. dem Drehzahlverhältnis zwischen Wickelwelle und Betätigungseinrichtung der bestimmten aufgewickelten Gurtlänge entspricht, innerhalb welcher die Gurtbandauszugssicherung erreicht werden soll. Diese Steuerfläche wird für den der bestimmten Gurtbandanfangslänge entsprechenden Drehwinkelbereich durch radiale Verlagerung in den Radius gebracht, auf welchem sich ein mit der Steuerfläche in Anlage bringbares Teil des Sicherungshebels um die Wickelwellenachse bewegt.

Anhand der Figuren wird an einem Ausführungsbeispiel die Erfindung noch näher erläutert. Es zeigt:
- Figur 1:: in perspektivischer auseinandergezogener Position eine Meachnikseite eines Sicherheitsgurtaufrollautomaten (Hubrollenautomat), bei welchem eine Sicherungseinrichtung gegen Gurtbandauszug in die gurtbandsensitive Vorverriegelungseinrichtung eingebaut ist;
- Figur 2:: die gurtbandsensitive Vorverriegelungseinrichtung mit der Sicherungseinrichtung in Normalposition; und
- Figur 3:: die Sicherungseinrichtung in Vorverriegelungsposition.

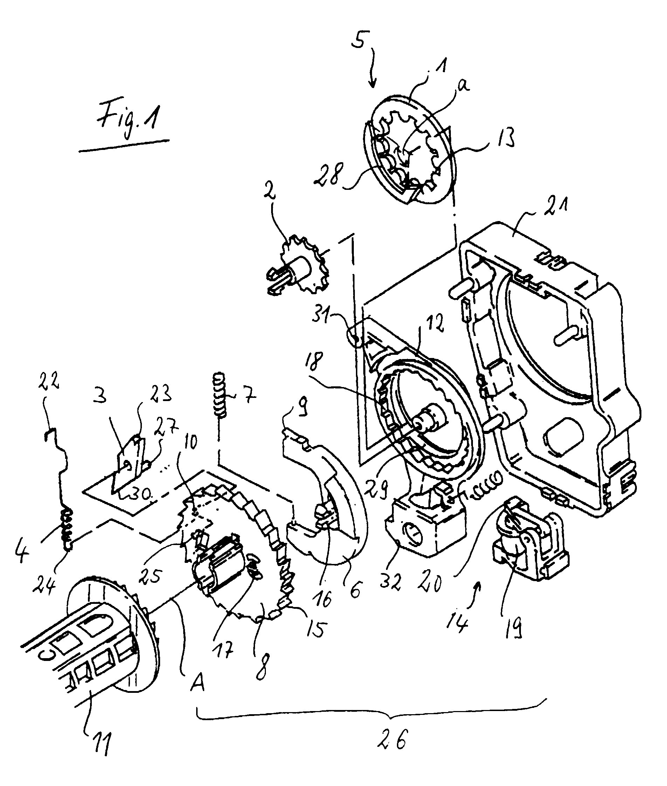

In den Figuren ist eine Wickelwelle 11 (Figur 1) eines Sicherheitsgurtaufrollautomaten an ihrer Mechanikseite dargestellt. Drehfest mit der Wickelwelle 11 ist in bekannter Weise ein Steuerrad 8 verbunden, das mit einer Außenzahnung 15 versehen ist. Das Steuerrad 8 dient als Träger für eine gurtbandsensitive Vorverriegelungseinrichtung, die im wesentlichen aus einer gegenüber dem Steuerrad 8 schwenkbaren Trägheitsmasse 6 und einer Sensorfeder 7 besteht. Mit Hilfe einer Befestigungseinrichtung 16 kann die Trägheitsmasse 6 schwenkbar auf das Steuerrad 8 in Ausnehmungen 17 aufgeklipst werden. Gegen die Kraft der am Steuerrad 8 abgestützten Sensorfeder ist die Trägheitsmasse 6 in bekannter Weise gegenüber dem Steuerrad 8 drehbar bei überhöhter von der Wickelwelle 11 ausgehender Drehbeschleunigung um die Wickelwellenachse A. Die Trägheitsmasse 6 besitzt eine Klinke 9, die mit einer Innenverzahnung 18 eines Trägers 12 für eine fahrzeugsensitive Vorverriegelungseinrichtung 14 bei Überschreitung der von der Sensorfeder 7 vorgegebenen Schwelle in Eingriff kommt, so daß die Wickelwelle 11 gegen weitere Umdrehung vorverriegelt ist. Hierdurch wird in bekannter Weise (deutsches Patent 37 11 537) eine gurtbandsensitive Vorverriegelungseinrichtung für die Wickelwelle 11 gebildet.

Die fahrzeugsensitive Vorverriegelungseinrichtung 14 besteht aus einer trägheitssensitiven Klinke 20, die durch eine bei überhöhter Beschleunigung oder Abbremsung verlagerten Kugel 19 mit der Außenzahnung 15 des Steuerrades 8 in Eingriff gebracht werden kann, so daß auf diese Weise eine fahrzeugsensitive Vorverriegelungseinrichtung zum Vorverriegeln der Wickelwelle 11 erreicht wird. Auch diese fahrzeugsensitive Vorverriegelungseinrichtung ist bekannt (deutsche Patentschrift 37 11 537) und in einem Sensorgehäuse 32 am Träger 12 untergebracht.

Die fahrzeugsensitive Vorverriegelungseinrichtung und die gurtbandsensitive Vorverriegelungseinrichtung bilden an der Mechanikseite des Aufrollautomaten eine Vorverriegelungseinrichtung 26 für die Wickelwelle 11. Ferner ist eine Abdeckung 21 zum Abdecken der Bauteile der Mechanikseite vorgesehen.

Das Steuerrad 8 bildet einen um die Wickelwellenachse A drehbaren ersten Träger für die Sicherungsbauteile der Sicherungseinrichtung. Diese bestehen beim dargestellten Ausführungsbeispiel aus einem zweiseitigen Sicherungshebel 3 und einer Sicherungsfeder 4. Der zweiseitige Sicherungshebel 3 ist um eine von einem an das Steuerrad angeformten Stift 10 gebildete Achse schwenkbar am Steuerrad 8 gelagert. Die Sicherungsfeder 4 greift mit ihrem einen Federende 22 an der einen Hebelseite in eine als Ausnehmung ausgebildete Eingriffsstelle 23. Das andere Federende 24 ist an einem Befestigungsstift 25 am ersten Träger bzw. dem Steuerrad 8 gelagert. Der Befestigungsstift 25 kann an das Steuerrad 8 angeformt sein, der zur Veränderung der Totpunktlage des aus Hebel 3 und Feder 4 bestehenden Hebel-Feder-Systems geführt wird. Am Hebel 3 ist ferner eine Abtaststelle 27 in Form eines Stiftes vorgesehen, der mit einer Betätigungseinrichtung 5 zum Verschwenken des Hebels 3 zusammenwirkt.

Zur Betätigung der Sicherungsbauteile dient die Betätigungseinrichtung 5, welche an einer Kulisse eine Steuerfläche 28 aufweist, die sich um die Wickelwellenachse A innerhalb eines bestimmten Winkelbereiches a erstreckt. Beim dargestellten Ausführungsbeispiel weist die Betätigungseinrichtung 5 einen außenliegenden Getriebering 1 eines Taumelgetriebes auf. Der Getriebering 1 bildet einen zweiten Träger innerhalb der Sicherungseinrichtung und dient als Träger in der Betätigungseinrichtung 5.

Der Getriebering 1 ist exzentrisch zur Wickelwellenachse A in einem dritten Träger 12, an welchem beim dargestellten Ausführungsbeispiel die fahrzeugsensitive Vorverriegelungseinrichtung 14 gelagert ist, geführt. Am Innenumfang ist hierzu eine exzentrische Lagerfläche 29 für den Getriebering 1 vorgesehen. Der Getriebering 1 besitzt eine Innenzahnung 13, mit welcher ein Abrollzahnrad 2 in Eingriff steht. Das Abrollzahnrad 2 ist drehfest mit der Wickelwelle 11 verbunden und dreht sich mit der Wickelwelle um die Wickelwellenachse A. Das Zahnrad 2 bewirkt somit die Übertragung der Drehbewegung der Wickelwelle 11 auf die Betätigungseinrichtung 5, wobei durch entsprechende Bemessung der Zahnung des Abrollzahnrades 2 und der Innenzahnung 13 am Getriebering 1 eine Untersetzung der Drehzahl der Wickelwelle 11 für die Drehung der Betätigungseinrichtung 5 um die Wickelwellenachse A erreicht wird.

Mit der Steuerfläche 28 der Betätigungseinrichtung 5 kann eine Abtaststelle 27 (z.B. ein Abtaststift) an der einen Hebelseite (erste Hebelseite) des Sicherungshebels 3 in Anlage gebracht werden.

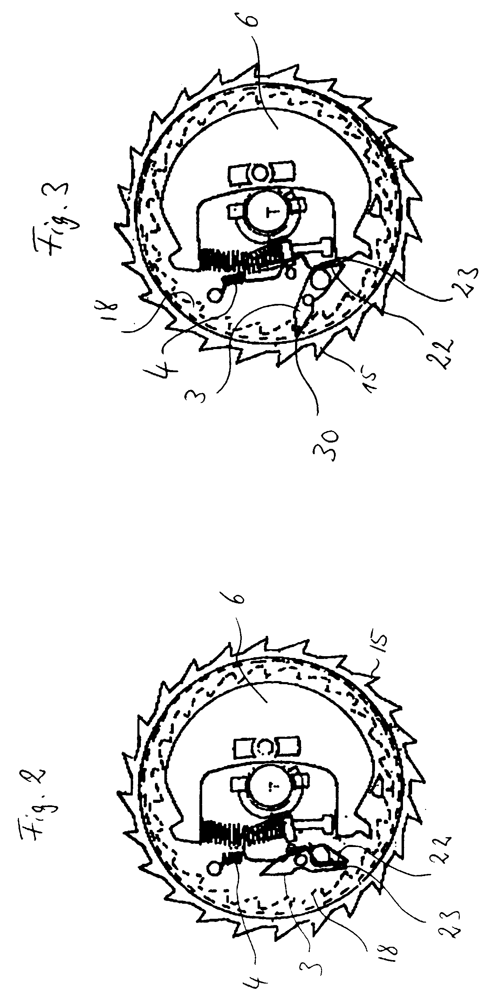

Die Exzentrizität der Lagerung des Getrieberinges 1 gegenüber der Wickelwellenachse A und damit der Steuerfläche 28 der Betätigungseinrichtung 5 sowie das Drehzahluntersetzungsverhältnis der Drehzahl der Steuerfläche 28 gegenüber der Drehzahl, welche durch das aus Abrollzahnrad 2 und Getriebering 1 gebildeten Getriebes erreicht wird, sind aufeinander abgestimmt. Beginnend mit der Stellung der Wickelwelle 11 bei vollständig abgezogenem Gurtband bis zum Erreichen einer bestimmten auf die Wickelwelle aufgewickelten Anfangsgurtbandlänge, welche beispielsweise fünf bis zehn Wickelumdrehungen entsprechen kann, ist durch die exzentrische Lagerung die Steuerfläche 28 radial gegenüber der Wickelwellenachse A verschiebbar und kann mit der Abtaststelle 27 des Sicherungshebels 3, welche sich auf einem bestimmten Radius um die Wikkelwellenachse A dreht, in Eingriff gebracht werden. Der Sicherungshebel 3 wird dadurch um seine Achse 10 verschwenkt und kommt aus der in Figur 2 gezeigten Normalstellung in die in Figur 3 gezeigte Vorverriegelungsstellung. Der Sicherungshebel 3 wird dabei aus der auf der einen Totpunktseite des aus Hebel 3 und Feder 4 bestehenden Feder-Hebelsystems liegenden und durch die Feder 4 vorgespannten Normalstellung in die auf der anderen Totpunktseite liegenden und ebenfalls durch die Feder 4 vorgespannten Vorverriegelungsposition gebracht. Eine Eingriffsspitze 30 am Sicherungshebel 3 wird dabei in Eingriff mit der Innenzahnung 29 am dritten Träger 12 gebracht. Der dritte Träger 12 ist am nicht näher dargestellten Rahmen des Aufrollautomaten an einer Stelle 31 abgestützt. Durch den Eingriff des Sicherungshebels 3 in die Innenzahnung 18 wird eine Vorverriegelung der Wickelwelle 11 erreicht, die so lange gesichert ist, wie die Abtaststelle 27 des Sicherungshebels 3 auf der Steuerfläche 28 der Betätigungseinrichtung 5 aufliegt. Diese gesicherte Vorverriegelung wird mithin so lange erreicht, bis, ausgehend von dem vollständig abgewickelten Sicherheitsgurtband, die vorbestimmte Gurtbandlänge auf die Wickelwelle 11 aufgewickelt ist. Diese entspricht etwa der zur Sicherung von größeren Gegenständen im Fahrzeug benötigten Auszugslänge des Gurtbandes.

Wenn das Gurtband über diese vorbestimmte Anfangsgurtbandlänge hinaus auf die Wickelwelle 11 aufgewickelt wird, bewegt sich aufgrund der exzentrischen Lagerung die Steuerfläche 28 aus dem Eingriffsbereich (Eingriffsradius) des Sicherungshebels 3 hinaus, so daß die Sicherungsfunktion aufgehoben ist und die gurtbandsensitive Vorverriegelungseinrichtung in herkömmlicher, oben beschriebener Art und Weise funktioniert.

Um einen größeren Gegenstand in einem Kraftfahrzeug mit Hilfe des Sicherheitsgurtbandes zu befestigen, wird dieses ganz oder bis in den Bereich ausgezogen, in welchem die Steuerfläche 28 mit dem Sicherungshebel 3 an der Abtaststelle 27 in Eingriff kommt. Hierdurch wird der Sicherungshebel in die oben beschriebene Vorverriegelungsposition, d.h. in Eingriff mit der Innenzahnung 18 am dritten Träger 12 gebracht. Um die Auszugslänge des Sicherheitsgurtes an den zu befestigenden Gegenstand anzupassen, wird das Sicherheitsgurtband durch die Wirkung einer bekannten nicht näher dargestellten, an der Federseite der Wickelwelle 11 wirkenden Rückholfeder selbsttätig so weit eingezogen und auf die Wickelwelle 11 aufgewikkelt, bis das Gurtband straff am zu befestigenden Gegenstand anliegt. Diese aufgewickelte Anfangsgurtbandlänge liegt innerhalb der vorbestimmten Anfangsgurtbandlänge, welche der Winkelausdehnung der Steuerfläche 28 der Betätigungseinrichtung 5 entspricht. Aufgrund der Wirkung des Sicherungshebels 3, der mit dieser Steuerfläche 28 in Eingriff bleibt, wird die Eingriffsspitze 30 des Sicherungshebels in der Vorverriegelungsstellung, d.h. in Eingriff mit der Innenzahnung 18 am Träger 12 gehalten. Während der Einzugsbewegung des Gurtbandes kann die Eingriffsspitze 30, welche durch die Kraft der Sicherungsfeder 4 vorgespannt ist, nachgiebig über die entsprechende Anzahl der Zähne der Innenzahnung 18 ratschen. Die als Stift ausgebildete Abtaststelle 27 liegt am Sicherungshebel 3 auf der gleichen Hebelseite wie die Eingriffsspitze 30. Die Sicherungsfeder 4 greift mit ihrem Ende 22 in eine Ausnehmung 23 an der zweiten Hebelseite des Sicherungshebels 3, so daß der Sicherungshebel sowohl in der in Figur 2 gezeigten Normalstellung als auch in der in Figur 3 gezeigten Vorverriegelungsstellung durch die Feder 4 vorgespannt wird. Zwischen diesen beiden Positionen liegt der Totpunkt des Feder-Hebelsystems. Beim Ratschen des Sicherungshebels 3 über die Zähne der Innenzahnung 18 bleibt der Vorverriegelungszustand ständig vorgespannt, so daß der Sicherungshebel 3 mit den jeweils nächstfolgenden Zähnen während der begrenzten Einzugsbewegung in Eingriff kommen kann, um den gewünschten Sicherungseffekt zu erreichen.

Durch Verschwenken der vorverriegelten Wickelwelle 11 um eine durch eine Stelle 31 am dritten Träger 12 gehende Schwenkachse kann die Wickelwelle in bekannter Weise in die Hauptblockierstellung durch den Gurtbandzug gebracht werden.

## Patentansprüche

1. Sicherheitsgurtaufrollautomat für ein Kraftfahrzeug mit
- einer Wickelwelle (11) zum Auf- und Abwickeln eines Sicherheitsgurtbandes,
- einer Vorverrieglungseinrichtung (26) zum Vorverriegeln der Wickelwelle (11) gegen eine weitere Umdrehung und zum Einsteuern in eine Hauptverriegelung, in welcher vom Gurtband ausgeübte Kräfte in einen mit dem Fahrzeug verbundenen Rahmen eingeleitet werden, wobei
- die Vorverriegelungseinrichtung (26) um die Wickelachse (A) drehbar ist und eine Betätigungseinrichtung (5) aufweist, welche über ein Untersetzungsgetriebe, das von einem von der Wickelwelle (11) angetriebenen und in eine Innenverzahnung (13) eingreifenden Abrollzahnrad (2) gebildet ist, mit einer gegenüber der Wickelwelle (11) untersetzten Drehzahl von der Wickelwelle (11) antreibbar ist, und wobei
- die Betätigungseinrichtung (5) ein von der jeweiligen auf der Wickelwelle (11) aufgewickelten Gurtbandlänge abhängige Drehwinkelposition einnimmt und bei voll von der Wickelwelle (11) abgezogenem Gurtband bis zu einer bestimmten auf der Wickewelle aufgewickelten Gurtbandlänge federbelastete Sicherungsbauteile (3, 4) betätigt, welche die Wickelwelle (11) in Vorverriegelung halten,
dadurch gekennzeichnet, dass
- die Betätigungseinrichtung (5) einen Getriebering (1) besitzt, der eine exzentrische Lagerung (1, 29) um die Wickelwellenachse (A) aufweist,
- die Innenverzahnung (13) an der Ringinnenseite des Getrieberings (1) vorgesehen ist, und
- das in die Innenverzahnung (13) eingreifende Abrollzahnrad (2) drehfest mit der Wickelwelle (11) ver-, bunden ist.

2. Sicherheitsgurtaufrollautomat nach Anspruch 1, dadurch gekennzeichnet, daß die Betätigungseinrichtung (5) einen sich über einen bestimmten Winkelbereich (a) um die Wickelwellenachse (A) erstreckenden Eingriffsbereich (Steuerfläche 28) zur Betätigung der Sicherungsbauteile (3, 4) aufweist.

3. Sicherheitsgurtaufrollautomat nach Anspruch 1 oder 2, dadurch gekennzeichnet, daß die Sicherungsbauteile (3, 4) an einem um die Wikkelwellenachse (A) drehbaren ersten Träger (8) gelagert sind und daß die Betätigungseinrichtung (5) um einen zweiten mit der verringerten Drehzahl um die Wickelwelle (A) drehbaren Träger (1) gelagert ist.

4. Sicherheitsgurtaufrollautomat nach einem der Ansprüche 1 bis 3, dadurch gekennzeichnet, daß eine gurtbandsensitive Vorverriegelungseinrichtung (6 - 9) und die Sicherungsbauteile (3, 4) den ersten Träger (8) als gemeinsamen Träger, der drehfest mit der Wickelwelle (11) verbunden ist, haben.

5. Sicherheitsgurtaufrollautomat nach einem der Ansprüche 1 bis 4, dadurch gekennzeichnet, daß die Sicherungsbauteile (3, 4) einen von einer Sicherungsfeder (4) beaufschlagten Sicherungshebel (3) aufweisen, der bei angreifender Betätigungseinrichtung (5) mit der Kraft der Sicherungsfeder (4) in die Vorverriegelungsstellung vorgespannt ist.

6. Sicherheitsgurtaufrollautomat nach Anspruch 5, dadurch gekennzeichnet, daß eine Hebelachse (10) des Sicherungshebels (3) um die Wickelwellenachse (A) auf einem bestimmten Radius drehbar ist und eine Abtaststelle (27) aufweist, welche mit der Betätigungseinrichtung (5) in Eingriff bringbar ist.

7. Sicherheitsgurtaufrollautomat nach einem der Ansprüche 1 bis 6, dadurch gekennzeichnet, daß der zweite Träger (1) Bestandteil eines um die Wikkelwellenachse (A) drehbaren Taumelgetriebes (1, 2) ist.

8. Sicherheitsgurtaufrollautomat nach einem der Ansprüche 1 bis 7, dadurch gekennzeichnet, daß der zweite Träger (1) als Getriebering mit innenliegender Zahnung (13) ausgebildet ist, der exzentrisch in einem bezüglich der Wickelwellenachse (A) ortsfest angeordneten dritten Träger (12) drehbar gelagert ist, und daß ein mit der Wickelwelle (11) drehfest verbundenes Abrollzahnrad (2) mit der innenliegenden Zahnung (13) in Eingriff steht.

9. Sicherheitsgurtaufrollautomat nach Anspruch 8, dadurch gekennzeichnet, daß am dritten Träger (12) ferner eine fahrzeugsensitive Vorverriegelungseinrichtung (14) gelagert ist.

## Claims

1. An automatic safety belt retractor for a motor vehicle comprising
- a winding shaft (11) for winding on and unwinding a safety belt webbing,
- a pre-locking device (26) for pre-locking of the winding shaft (11) to prevent further rotary movement and for engagement into a main locking mode in which forces applied by the belt webbing are transmitted to a frame connected to the vehicle, wherein
- the pre-locking device (26) is rotatable about the winding axis (A) and has an actuating device (5) which is drivable by the winding shaft (11) at a rotary speed which is stepped down relative to the winding shaft (11) by way of a step-down transmission formed by a rolling gear (2) which is driven by the winding shaft (11) and which engages into an internal tooth arrangement (13), and wherein
- the actuating device (5) assumes a rotary angular position which is dependent on the respective belt webbing length wound on the winding shaft (11) and, when the belt webbing is fully withdrawn from the winding shaft (11), as far as a given belt webbing length wound on the winding shaft (11), actuates spring-loaded securing components (3, 4) which hold the winding shaft in the pre-locking condition,
characterised in that
- the actuating device (5) has a transmission ring (1) which has an eccentric mounting (1, 29) about the axis (A) of the winding shaft,
- the internal tooth arrangement (13) is provided at the inside of the transmission ring (1), and
- the rolling gear (2) which engages into the internal tooth arrangement (13) is non-rotatably connected to the winding shaft (11).

2. An automatic safety belt retractor according to claim 1 characterised in that the actuating device (5) has an engagement region (control surface 28) for actuation of the securing components (3, 4), said engagement region extending over a given angular region (a) about the axis (A) of the winding shaft.

3. An automatic safety belt retractor according to claim 1 or claim 2 characterised in that the securing components (3, 4) are mounted on a first carrier (8) rotatable about the axis (A) of the winding shaft and that the actuating device (5) is mounted about a second carrier (1) rotatable at the reduced rotary speed about the winding shaft (A).

4. An automatic safety belt retractor according to one of claims 1 to 3 characterised in that a belt webbing-sensitive pre-locking device (6 - 9) and the securing components (3, 4) have the first carrier (8) as a common carrier which is non-rotatably connected to the winding shaft (11).

5. An automatic safety belt retractor according to one of claims 1 to 4 characterised in that the securing components (3, 4) have a securing lever (3) which is acted upon by a securing spring (4) and which when the actuating device (5) is in the engagement condition is biased by the force of the securing spring (4) into the pre-locking position.

6. An automatic safety belt retractor according to claim 5 characterised in that a lever axis (10) of the securing lever (3) is rotatable about the axis (A) of the winding shaft on a given radius and has a sensing means (27) which can be brought into engagement with the actuating device (5).

7. An automatic safety belt retractor according to one of claims 1 to 6 characterised in that the second carrier (1) is a component of a nutating transmission (1, 2) rotatable about the axis (A) of the winding shaft.

8. An automatic safety belt retractor according to one of claims 1 to 7 characterised in that the second carrier (1) is in the form of a transmission ring with an internally disposed tooth arrangement (13), which is rotatably mounted eccentrically in a third carrier (12) arranged stationarily with respect to the axis (A) of the winding shaft, and that a rolling gear (2) non-rotatably connected to the winding shaft (11) is in engagement with the internally disposed tooth arrangement (13).

9. An automatic safety belt retractor according to claim 8 characterised in that a vehicle-sensitive pre-locking device (14) is also mounted on the third carrier (12).

## Revendications

1. Enrouleur automatique de ceinture de sécurité pour un véhicule comprenant
- un arbre enrouleur (11) pour l'enroulement et le déroulement d'une ceinture de sécurité,
- un dispositif de pré-verrouillage (26) pour le pré-verrouillage de l'arbre enrouleur (11) contre toute rotation ultérieure et pour la commande d'amenée dans un verrouillage principal, dans lequel des forces exercées par la ceinture sont transmises à un cadre assemblé avec le véhicule,
- le dispositif de pré-verrouillage (26) pouvant tourner autour de l'axe d'enroulement (A) et présentant un dispositif de commande (5) entraînable par l'arbre enrouleur (11), à une vitesse de rotation démultipliée par rapport à l'arbre enrouleur (11), par l'intermédiaire d'un réducteur formé par un pignon de déroulement (2) entraîné par l'arbre enrouleur (11) et s'engageant dans une denture intérieure (13), et
- le dispositif de commande (5) occupant une position angulaire qui dépend de la longueur d'enroulement instantanée de la ceinture sur l'arbre enrouleur (11), et actionnant des composants de blocage (3, 4) chargés par ressort, qui maintiennent l'arbre enrouleur (11) à l'état de pré-verrouillage, en position d'étirement total de la ceinture de l'arbre enrouleur (11) jusqu'à une longueur d'enroulement donnée sur l'arbre enrouleur (11),
caractérisé en ce que
- le dispositif de commande (5) possède une bague d'engrenage (1) qui présente un montage excentré (1, 29) autour de l'axe (A) de l'arbre enrouleur,
- la denture intérieure (13) est prévue sur le côté annulaire interne de la bague d'engrenage (1), et
- le pignon de déroulement (2), s'engageant dans la denture intérieure (13), est assemblé de façon solidaire en rotation à l'arbre enrouleur (11).

2. Enrouleur automatique de ceinture de sécurité suivant la revendication 1, caractérisé en ce que le dispositif de commande (5) présente une zone de prise (surface de commande 28), qui s'étend sur une plage angulaire donnée (a) autour de l'axe (A) de l'arbre enrouleur, pour l'actionnement des composants de blocage (3, 4).

3. Enrouleur automatique de ceinture de sécurité suivant l'une des revendications 1 et 2, caractérisé en ce que les composants de blocage (3, 4) sont montés sur un premier support (8), qui peut tourner autour de l'axe (A) de l'arbre enrouleur, et en ce que le dispositif de commande (5) est monté autour d'un deuxième support (1), qui peut tourner à la vitesse de rotation réduite autour de l'arbre enrouleur (A).

4. Enrouleur automatique de ceinture de sécurité suivant l'une des revendications 1 à 3, caractérisé en ce qu'un dispositif de pré-verrouillage sensible à la ceinture (6 - 9) et les composants de blocage (3, 4) ont comme support commun le premier support (8), qui est assemblé de façon solidaire en rotation à l'arbre enrouleur (11).

5. Enrouleur automatique de ceinture de sécurité suivant l'une des revendications 1 à 4, caractérisé en ce que les composants de blocage (3, 4) présentent un levier de blocage (3), sollicité par un ressort de blocage (4) et qui est précontraint dans la position de pré-verrouillage par la force du ressort de blocage (4) lorsque par le dispositif de commande (5) est en prise.

6. Enrouleur automatique de ceinture de sécurité suivant la revendication 5, caractérisé en ce qu'un axe de levier (10) du levier de blocage (3) peut tourner sur un rayon donné autour de l'axe (A) de l'arbre enrouleur, et présente un palpeur (27), qui peut être amené en prise avec le dispositif de commande (5).

7. Enrouleur automatique de ceinture de sécurité suivant l'une des revendications 1 à 6, caractérisé en ce que le deuxième support (1) fait partie intégrante d'une transmission oscillante (1, 2), qui peut tourner autour de l'axe (A) de l'arbre enrouleur.

8. Enrouleur automatique de ceinture de sécurité suivant l'une des revendications 1 à 7, caractérisé en ce que le deuxième support (1) est réalisé sous forme de bague d'engrenage munie d'une denture intérieure (13), qui est logée avec une possibilité de rotation, de manière excentrée, dans un troisième support (12) stationnaire par rapport à l'axe d'arbre enrouleur (A), et en ce qu'un pignon de déroulement (2), solidaire de l'arbre enrouleur (11), est en prise avec la denture intérieure (13).

9. Enrouleur automatique de ceinture de sécurité suivant la revendication 8, caractérisé en ce qu'un dispositif de pré-verrouillage (14) sensible au véhicule est par ailleurs monté sur le troisième support (12).
